# EUROPEAN PATENT SPECIFICATION

(11) **EP 1 166 005 B1**
(45) Date of publication and mention of the grant of the patent: **14.01.2004**
(21) Application number: 00902675.8
(22) Date of filing: 28.01.2000
(51) Int. Cl.: F16L 47/02, B29C 65/34

(54) **METHOD FOR JOINING SPIRAL WOUND PIPES**
VERFAHREN ZUR VERBINDUNG SPIRALFÖRMIG GEWICKELTER ROHRE
PROCEDE DE RACCORDEMENT DE TUYAUX ENROULES EN SPIRALE

(30) Priority: 03.02.1999 FI 990204
(43) Date of publication of application: 02.01.2002
(73) Proprietor: Oy KWH Pipe AB, 65370 Vasa (FI)
(72) Inventor: Blomqvist, Gunnar, 65520 Helsingby (FI); Slotte, Stefan, 65320 Vasa (FI); Andtbacka, Anders, 65280 Vasa (FI)
(74) Representative: Eriksson, Svante Johan Christer
(86) International application number: PCT/FI2000/000058
(87) International publication number: WO 2000/046540

(56) References cited:
- WO-A1-97/01433
- DE-A1- 19 718 790
- FI-B- 87 318
- US-A- 5 410 131
- US-A- 5 415 440

## Description

This invention relates to a method for joining thermoplastics pipes made by spiral winding of a hollow profile with mainly rectangular cross section, wherein the ends of the thermoplastics pipes are prepared by closing end opening of the hollow profile so that the pipe receives an even stair like end surface, after which the pipes to be joined are positioned aligned with each other.

In joining together of spiral wound pipes, a lot of problems are encountered, either as a consequence of the irregular form of the pipe end with an open profile end, or due to a straightly cut pipe end with an end surface having, over most of the periphery of the pipe, a groove-formed recess passing into the helically extending channel of the profile.

In accordance with previously known methods as, for example, the method according to Fi-A-87318, the joining together of spirally wound pipes has been carried out either by extruder welding from the inside of the pipe, or by pipe sleeve joints. All of these previously known methods tend to require relatively much work. Extruder welding also requires a relatively complicated equipment and the pipe sleeve joints often lead to problems with leaking seams.

The objective of the present invention is to eliminate these problems. This is achieved by a method according to claim 1, wherein
preparing of the pipe end comprises cutting of the profile in the end of the pipe along inside of a side wall that is fastened to nearest preceding wound round resulting in an end surface with a double wall thickness, and cutting of the end of the profile with a section in a right or an obtuse angle, of equal size for all of the ends of the pipes to be joined together,
a disc-formed welding ring, matching with the inner and outer diameters of the pipes, is inserted in the slot between the two pipes, which welding ring comprises at least one loop of a resistance wire covered by a thermoplastics sleeve,
the two pipes are centered with an inner root support and an outer root support around the seam with the welding ring,
the pipe ends are pressed together against each other,
the resistance wire of the welding ring is connected to a current source for heating the thermoplastics material in the welding ring and the pipe ends so that the thermoplastics material melts down and forms a welding seam,
the welding seam is cooled,
the root supports and other accessories are removed from the pipe welded together, and
the connection wires of the welding ring are cutted off.

Using this method, an elegant and simple way to join together spiral wound pipes is provided, resulting in nice, tight, and secure seams. When the outer profile is cut using the method described above, a pipe end is obtained with a double wall thickness, and this will, to a sufficient degree, maintain its rigidity even under the heating process with the welding ring, thus ensuring that a sufficient pressure force can be maintained between the end surfaces of both of the pipes to be joined together.

Other characteristics of the invention will become evident by studying the attached, dependent Claims 2 to 14.

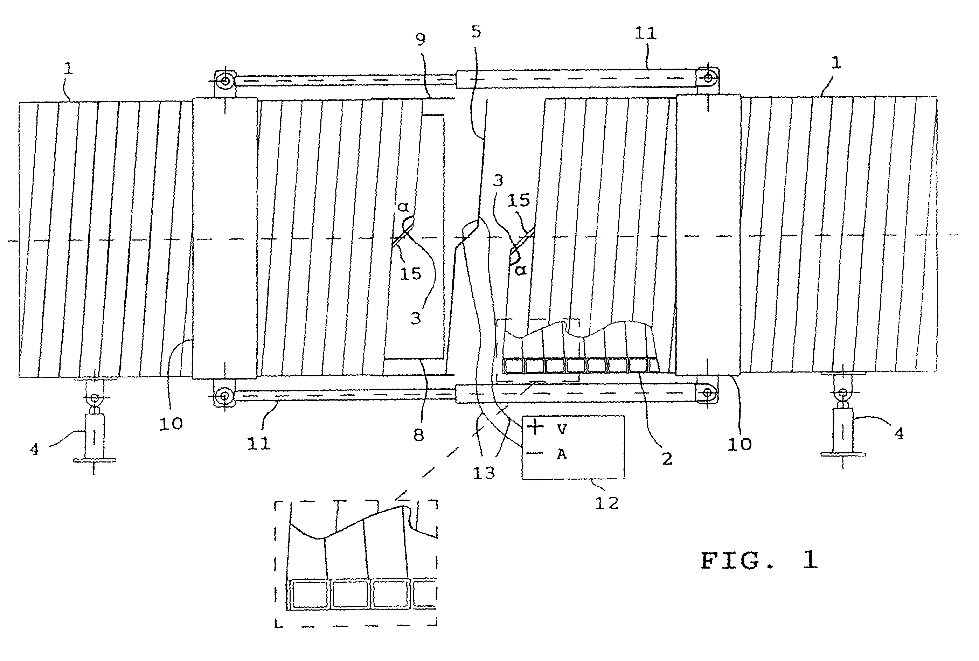

The invention is described in more detail with reference to the attached drawing where
Fig. 1 shows a principle sketch at a stage of the method in accordance with this invention, when all components are installed and before any pressure force is directed to the pipe ends,
Fig. 2 shows an end view of the stage of the method in Fig. 1.
Fig. 3 shows an end view of another embodyment of the method in accordance with this invention,
Fig. 4 shows a completed joint made in accordance with this invention,
Fig. 5 shows an example of a welding ring in accordance with this invention, seen in perspective,
Fig. 6 shows a section A-A through the welding ring in Fig. 4 and/or Fig. 5,
Fig. 7 shows another example of a welding ring in accordance with this invention,
Figs. 8a to 8g show a principle sketch of making a welding ring in accordance with Fig. 6, and
Fig. 9a and 9b show two prefered embodyments of a welding ring.

Two thermoplastic pipes 1, that are made by spiral winding a hollow profile 2 with a mainly rectangular cross section, and by welding together every wound round to the nearest located preceding wound round, are joined together in accordance with this invention in the following way:

The pipe ends to be joined together are cut along the inside of the side wall of the spiral wound profile 2 that is fastened to the nearest preceding wound round of the profile, mainly around the entire periphery of the pipe and with a section 3 that cuts the end of the profile 2 in a right or obtuse angle α which angle has to be of equal size for both pipe ends. The hole in the cut end of the profile 2 is closed with thermoplastics material and the entire pipe end surface is prepared to present an even surface. Thereafter, the two pipes 1 are positioned aligned with each other and carried by adjustable pipe supports 4, so that the cut profile ends 3 are set axially offset in relation to each other. A disc-formed welding ring 5 is inserted in the slot between the two pipe ends. Its dimensions are matched with the inner and outer diameters of the pipe. The welding ring 5 comprises at least one loop of a resistance wire 6 covered by a thermoplastics sleeve 7. Thereafter, the pipe ends are aligned, using an inner root support 8 and an outer root support 9 around the seam with the welding ring 5. These root supports 8, 9 ensure that an absolutely even seam surface is obtained and, at the same time, they prevent the resistance wire 6 of the welding ring 5 from protruding out from the seam during subsequent treatment stages. Both pipes 1 have beforehand been provided with a pipe clamp 10, which pipe clamps 10 are connected to each other by hydraulic cylinders 11 arranged to press the pipe ends against each other. The resistance wire 6 of the welding ring is connected to a current source 12 to heat the thermoplastics material in the welding ring 5 and the end surfaces of the pipes 1 so that the thermoplastics material melts down to form a welding seam, whereafter the welding seam is cooled down and the root supports 8,9 and other auxiliary accessories 10, 11 are removed from the pipe 1 welded together at the same time as the connecting wires 13 between the welding ring 5 and the current source 12 are cut off, after which the joint is completed.

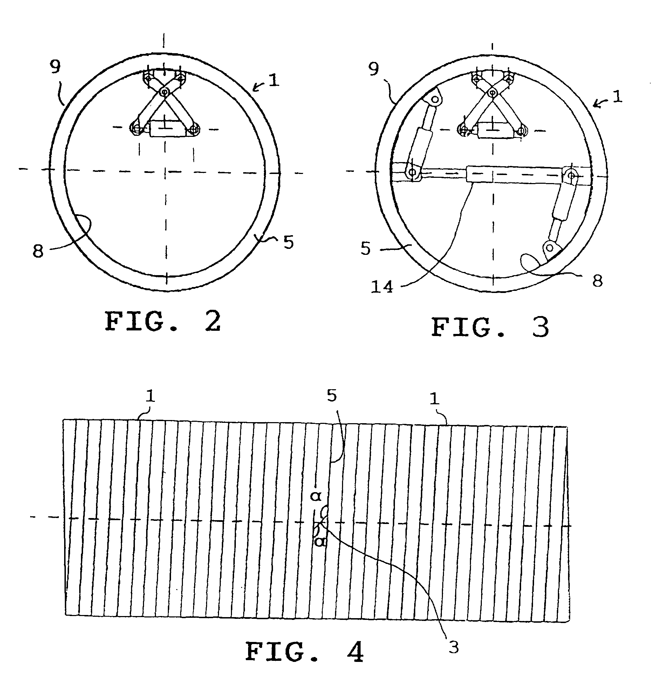

When the ends of the profile 2 are cut with a section cutting the profile perpendicularly, the pipe ends have, in addition to a compressive force pressing the pipe ends together, also to be subjected to a torsional force, e.g. by using a torsion cylinder arrangement 14, as shown in Fig. 3, in order to obtain a necessary compressive force between the cut profile ends 3. The torsion cylinder arrangement 14 comprises a diagonally directed cylinder, arranged to be prestressed and fastened to one of the pipes 1, and two torsion cylinders fastened to the respective ends of said cylinder, which torsion cylinders are arranged to exert a torsion force between the both pipes 1. Hereby, the welding ring 5 must in advance be bent so that it precisely follows the form of the pipe end with the cut profile end 3.

By cutting the profile end 3 with a section cutting the profile 2 in an obtuse angle, such an advantage is reached that a sufficient compressive force is obtained, also between the cut profile ends, by using only the hydraulic cylinders 11, which will considerably facilitate the joining operation. The bigger the angle α is, the better the welding result will be. Very good results can be obtained if the angle α is 135° or 150°. Hereby, also fully flat, somewhat flexible welding rings 5 can be used, which completely match the form of the pipe ends, when the pipe ends are pressed together.

According to a preferred embodyment the closing of the hole in the profile end 3 is carried out by using a thermoplastics plate 15 that is welded to the cut end surface 3 of the profile 2. To further ensure an absolute tightness of the seam, extruded thermoplastics mass can be supplied to the concave angle between the cut profile end 3 provided with the thermoplastics plate 15 and the profile wall in the end surface of the pipe 1, and simultaneously the outer convex angle between said thermoplastic plate 15 and the profile wall in the end surface of the pipe 1 can be somewhat rounded off.

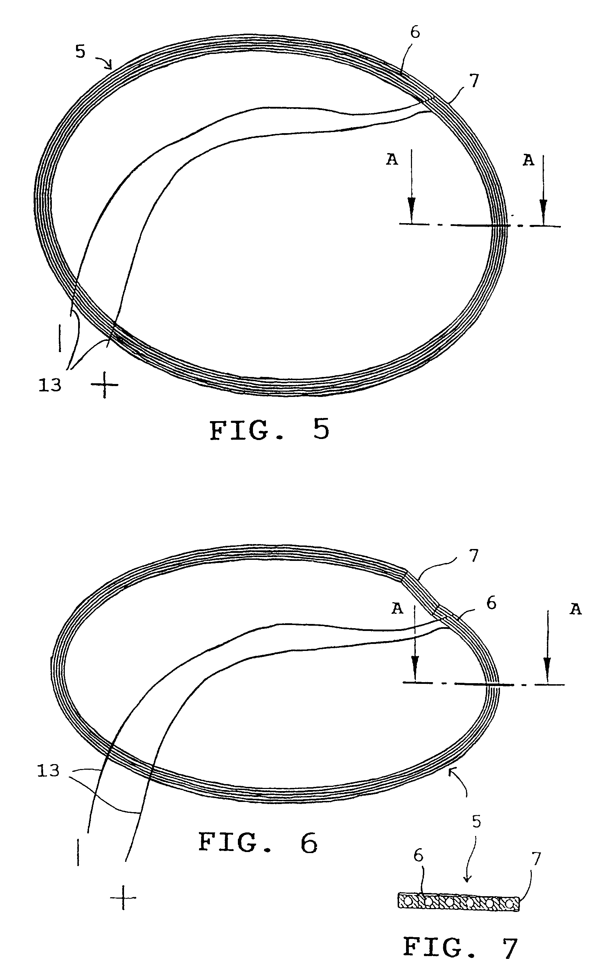

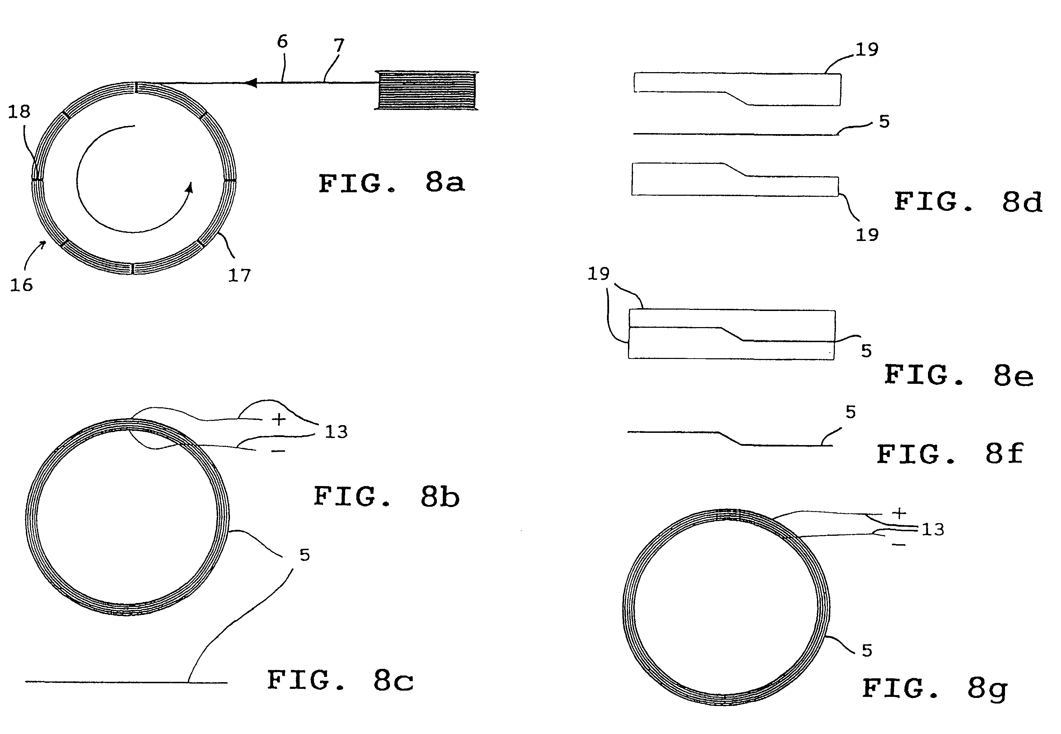

The welding ring 5 used in the method in accordance with the present invention can suitably be produced by extruding a thermoplastic sleeve 7 around a painted resistance wire 6. The thermoplastic sleeve 7 may have a quadratic, a rectangular, as in Fig. 7, or a round profile. The obtained thermoplastics covered resistance wire 6 is wound spirally on a removable spool 16 (Fig. 8a) the core of which having a diameter corresponding to the inner diameter of the pipe 1 and a length corresponding to the width of the thermoplastics sleeve, the flanges 17 of which are provided with radially directed slots 18 through which the spirally wound windings of the welding ring 5 are joined together by welds, whereby a welding ring in accordance with Figs. 5 and 8b is obtained, showing a profile in accordance with 8c.

If the welding ring 5 must be bent beforehand, this can preferably be carried out between two pressing plates 19, as indicated in Figs. 8d and 8e, which pressing plates 19 have a form matching with that of the end surfaces of the pipes to be joined together. The pressing results in a welding ring in accordance with Fig. 6, respectively 8f, and 8g.

The connecting wires 13 of a welding ring 5 are mostly drawn to the outer periphery of a pipe to be joinded, especially if the pipe has a small diameter, i.e. below 800 mm. In joining pipes having a large diameter, i.e. above 800 mm both connecting wires 13 of the welding ring 5 may preferably be drawn to the inner periphery of the pipe. Also by joining pipes having a small diameter it may be preferable to draw both connecting wires to the inner periphery of the pipe, especially during severe conditions.

According to another embodyment the welding ring 5 may be built up of two concentrically arranged discs, whereby the connecting wires 13 of the outer disc are drawn to the outer periphery of said disc, and the connecting wires 13 of the inner disc to the inner periphery of the latter. Alternatively, the welding ring 5 may comprise two separate loops of resistance wires 6, an inner and an outer, which are connected to their respective current sources, or to a current source with several outputs.

In order to avoid drawing of one connecting wire radially across the whole welding ring the thermoplastics covered resistance wire 6 can be double folded before winding on the spool 16. This will result in a welding ring 5 having both wire ends at its outer periphery, as shown in fig.9a.

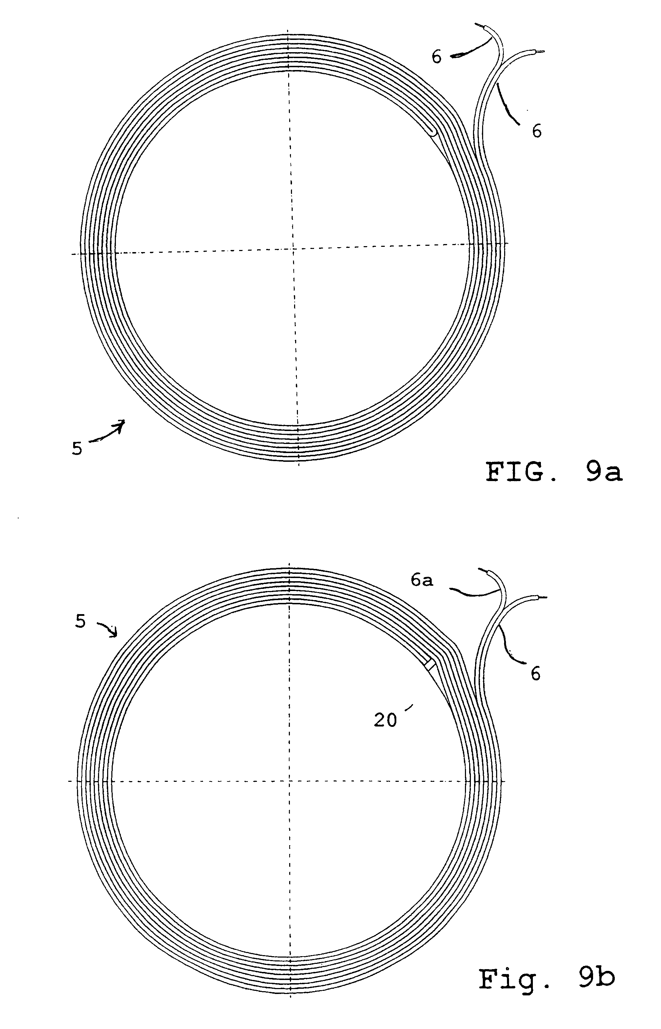

According to a preferred embodiment the welding ring 5 is built up of two thermoplastics covered resistance wires 6 and 6a as schematically shown in figure 9b. One end of both wires 6 and 6a are placed one upon another on the core of the previously mentioned removable spool 16 and both wires 6 and 6a are spirally wound on the spool and welded together as previously described. Such a welding ring enables the use of either the inner or the outer ends of the resistance wires 6, 6a as connecting wires whereby the opposite ends of said resistance wires 6, 6a are coupled together by a coupling means 20. In fig. 9b the inner ends of the resistance wires are coupled together by the coupling means 20 and the outer ends are intended to be connected to a current source.

## Claims

1. A method for joining thermoplastics pipes (1) made by spiral winding of a hollow profile (2) with mainly rectangular cross section, wherein the ends of the thermoplastics pipes are prepared by closing end opening of the hollow profile so that the pipe receives an even stair like end surface, after which the pipes to be joined are positioned aligned with each other, wherein
preparing of the pipe end comprises cutting of the profile (2) in the end of the pipe along inside of a side wall that is fastened to nearest preceding wound round resulting in an end surface with a double wall thickness, and cutting of the end (3) of the profile with a section in a right or an obtuse angle (α), of equal size for all of the ends of the pipes to be joined together,
a disc-formed welding ring (5), matching with the inner and outer diameters of the pipes, is inserted in the slot between the two pipes (1), which welding ring comprises at least one loop of a resistance wire (6) covered by a thermoplastics sleeve (7),
the two pipes (1) are centered with an inner root support (8) and an outer root support (9) around the seam with the welding ring (5),
the pipe ends are pressed together against each other,
the resistance wire (6) of the welding ring is connected to a current source (12) for heating the thermoplastics material in the welding ring (5) and the pipe ends so that the thermoplastics material melts down and forms a welding seam,
the welding seam is cooled,
the root supports (8, 9) and other accessories (10, 11) are removed from the pipe welded together, and
the connection wires (13) of the welding ring are cutted off.

2. A method in accordance with Claim 1, **characterized in that** the angle (α) in which the profile ends are cut is 135°.

3. A method in accordance with Claim 1, **characterized in that** the angle (α) in which the profile ends are cut is 150°.

4. A method in accordance with Claim 1, **characterized in that** closing of the holes in the profile ends (3) is carried out by welding a plastics plate (15) on the cut profile end (3).

5. A method in accordance with Claim 4, **characterized in that** the concave inner angle between the cut profile end (3) with the plastics plate (15) and the end surface of the pipe is supplied with extruded thermoplastics mass, and the convex outer angle between the plastics plate (15) and the end surface of the pipe is somewhat rounded off.

6. A method in accordance with Claim 1, **characterized in that** the welding ring (5) is flexible and matches with the form of the prepared end surface of the pipe ends when the pipe ends are pressed together.

7. A method in accordance with Claim 1, **characterized in that** the welding ring (5) is bent beforehand between two pressing plates (19) to the same form as the pipe ends to be joined together.

8. A method in accordance with Claim 1, **characterized in that** the pipes (1) are, in addition to the force pressing them together, also exerted to a torsion force in order to obtain a compressive force between the cut profile ends (3) of the pipe ends.

9. A method in accordance with Claim 1, **characterized in that** the welding ring (5) is manufactured by extruding a thermoplastics sleeve (7) around a painted resistance wire (6) and by spirally winding the obtained thermoplastics covered resistance wire (6) on a removable spool (16) the core of which having a diameter corresponding to the inner diameter of the pipe (1), and a length corresponding to the width of the thermoplastics sleeve (7), and the flanges (7) of which are provided with radially directed slots (18), through which the in spiral form wound rounds of the welding ring (5) are joined together with each other by welds.

10. A method in accordance with Claim 9, **characterized in that** the connecting wires (13) of the welding ring (5) are drawn either to the outer or the inner periphery of the welding ring (5).

11. A method according to Claim 9, **characterized in that** the welding ring (5) is built up by spirally winding two thermoplastics covered resistance wires (6,6a) simultaneously on the removable spool (16).

12. A method according to claim 11, **characterized in that** one pair of ends of said resistance wires (6, 6a) is interconnected by means of a coupling means (20) and the opposite pair of ends is connectable to a current source (12).

13. A method according to claim 9, **characterized in that** the thermoplastics covered resistance wire (6) is double folded before the winding on the removable spool (16).

14. A method in accordance with Claim 9, **characterized in that** the welding ring (5) is wound by a radially inner and a radially outer profile loop (6), the connecting wires of which are led, respectively, to the inner and the outer peripheries of the welding ring (5).

## Patentansprüche

1. Verfahren zum Verbinden thermoplastischer Rohre (1), die durch wendelförmiges Wickeln eines hohlen Profils (2) mit weitgehend rechteckigem Querschnitt hergestellt sind, wobei die Enden der thermoplastischen Rohre durch Schließen der Endöffnung des hohlen Profils vorbereitet werden, so daß das Rohr eine gleichmäßige treppenartige Endoberfläche erhält, wonach die zu verbindenden Rohre relativ zueinander geradlinig ausgerichtet angeordnet werden, wobei
die Vorbereitung des Rohrendes das Zuschneiden des Profils (2) im Ende des Rohres längs der Innenseite einer Seitenwand, die an der unmittelbar vorhergehenden Windung befestigt ist, so daß sich eine Endfläche mit doppelter Wandstärke ergibt, und das Zuschneiden des Endes (3) des Profils mit einem Schnitt unter einem rechten oder stumpfen Winkel (α) gleicher Größe bei allen Enden der zu verbindenden Rohre umfaßt,
ein scheibenförmiger Schweißring (5), der an die Innen- und Außendurchmesser der Rohre angepaßt ist, in den Spalt zwischen den beiden Rohren (1) eingefügt wird, wobei der Schweißring wenigstens eine Windung aus einem Widerstandsdraht (6) aufweist, der durch eine thermoplastische Hülle (7) abgedeckt ist,
die beiden Rohre (1) mit einer inneren Wurzelstütze (8) und einer äußeren Wurzelstütze (9) um die Naht mit dem Schweißring (5) herum zentriert werden,
die Rohrenden aneinander gedrückt werden,
der Widerstandsdraht (6) des Schweißrings an einer Stromquelle (12) zum Erwärmen des thermoplastischen Materials in dem Schweißring (5) und den Rohrenden angeschlossen wird, so daß das thermoplastische Material schmilzt und eine Schweißnaht bildet,
die Schweißnaht abgekühlt wird,
die Wurzelstützen (8, 9) und weiteres Zubehör (10, 11) von dem zusammengeschweißten Rohr entfernt werden und
die Anschlußdrähte (13) des Schweißrings abgeschnitten werden.

2. Verfahren nach Anspruch 1, **dadurch gekennzeichnet, daß** der Winkel (α), unter dem die Profilenden zugeschnitten werden, 135° beträgt.

3. Verfahren nach Anspruch 1, **dadurch gekennzeichnet, daß** der Winkel (α), unter dem die Profilenden zugeschnitten werden, 150° beträgt.

4. Verfahren nach Anspruch 1, **dadurch gekennzeichnet, daß** das Verschließen der Löcher in den Profilenden (3) durch Anschweißen einer Kunststoffplatte (15) an dem zugeschnittenen Profilende (3) ausgeführt wird.

5. Verfahren nach Anspruch 4, **dadurch gekennzeichnet, daß** der konkave innere Winkel zwischen dem zugeschnittenen Profilende (3) mit der Kunststoffplatte (15) und der Endfläche des Rohres mit extrudierter thermoplastischer Masse gefüllt wird und der konvexe Außenwinkel zwischen der Kunststoffplatte (15) und der Endfläche des Rohres etwas abgerundet wird.

6. Verfahren nach Anspruch 1, **dadurch gekennzeichnet, daß** der Schweißring (5) flexibel ist und an die Form der vorbereiteten Endfläche der Rohrenden angepaßt wird, wenn die Rohrenden aneinander gedrückt werden.

7. Verfahren nach Anspruch 1, **dadurch gekennzeichnet, daß** der Schweißring (5) vorher zwischen zwei Preßplatten (19) in die gleiche Form wie die zu verbindenden Rohrenden gebogen wird.

8. Verfahren nach Anspruch 1, **dadurch gekennzeichnet, daß** auf die Rohre (1) zusätzlich zu der sie aneinander drückenden Kraft auch eine Torsionskraft ausgeübt wird, um eine Kompressionskraft zwischen den zugeschnittenen Profilenden (3) der Rohrenden zu erzielen.

9. Verfahren nach Anspruch 1, **dadurch gekennzeichnet, daß** der Schweißring (5) durch Extrudieren einer thermoplastischen Hülle (7) um einen lackierten Widerstandsdraht (6) herum und durch spiralförmiges Wickeln des mit einem thermoplastischen Kunststoff beschichteten Widerstandsdrahts (6) um eine entfernbare Spule (16) herum hergestellt wird, deren Kern ein dem Innendurchmesser des Rohres (1) entsprechenden Durchmesser und eine der Breite der thermoplastischen Hülle (7) entsprechende Länge aufweist und deren Flansche (17) mit radial gerichteten Schlitzen (18) versehen werden, durch die die spiralförmig gewickelten Windungen des Schweißrings (5) hindurch durch Schweißen miteinander verbunden werden.

10. Verfahren nach Anspruch 9, **dadurch gekennzeichnet, daß** die Anschlußdrähte (13) des Schweißrings (5) entweder zum inneren oder zum äußeren Umfang des Schweißrings (5) gezogen werden.

11. Verfahren nach Anspruch 9, **dadurch gekennzeichnet, daß** der Schweißring (5) durch gleichzeitiges, spiralförmiges Aufwickeln zweier mit thermoplastischem Kunststoff beschichteter Widerstandsdrähte (6, 6a) auf der entfernbaren Spule (16) ausgebildet wird.

12. Verfahren nach Anspruch 11, **dadurch gekennzeichnet, daß** das eine Paar der Enden der Widerstandsdrähte (6, 6a) durch ein Verbindungsmittel (20) verbunden wird und das gegenüberliegende Paar der Enden mit einer Stromquelle (12) verbindbar ist.

13. Verfahren nach Anspruch 9, **dadurch gekennzeichnet, daß** der mit thermoplastischem Kunststoff beschichtete Widerstandsdraht (6) vor dem Aufwickeln auf der entfernbaren Spule (16) doppelt gefaltet wird.

14. Verfahren nach Anspruch 9, **dadurch gekennzeichnet, daß** der Schweißring (5) aus einer radial inneren und einer radial äußeren Profilwindung (6) gewikkelt ist, deren Anschlußdrähte jeweils zum inneren und äußeren Umfang des Schweißrings (5) geführt werden.

## Revendications

1. Procédé de raccordement de tuyaux en matière thermoplastique (1) fabriqués par enroulement hélicoïdal d'un profilé creux (2) à section transversale principalement rectangulaire, dans lequel les extrémités des tuyaux en matière thermoplastique sont préparées par fermeture de l'orifice d'extrémité du profilé creux de sorte que le tuyau présente une surface d'extrémité régulière à gradin, après quoi les tuyaux à raccorder sont placés en alignement mutuel, dans lequel
la préparation de l'extrémité de tuyau comprend la coupe du profilé (2) à l'extrémité du tuyau le long de l'intérieur d'une paroi latérale qui est fixée à la spire précédente la plus proche, ce qui donne une surface d'extrémité à double épaisseur de paroi, et la coupe de l'extrémité (3) du profilé suivant une section à angle droit ou obtus (α), de même dimension pour toutes les extrémités des tuyaux à raccorder,
un anneau de soudage en forme de disque (5), qui concorde avec les diamètres intérieur et extérieur des tuyaux, est inséré dans l'intervalle entre les deux tuyaux (1), cet anneau de soudage comprenant au moins une boucle d'un fil électriquement résistant (6) revêtu d'une gaine en matière thermoplastique (7),
les deux tuyaux (1) sont centrés au moyen d'un support d'extrémité intérieur (8) et d'un support d'extrémité extérieur (9) autour du joint comportant l'anneau de soudage (5),
les extrémités des tuyaux sont pressées l'une contre l'autre,
le fil électriquement résistant (6) de l'anneau de soudage est connecté à une source de courant (12) pour chauffer la matière thermoplastique de l'anneau de soudage (5) et des extrémités des tuyaux, de sorte que la matière thermoplastique fond et forme un joint soudé,
le joint soudé est refroidi,
les supports d'extrémité (8, 9) et d'autres accessoires (10, 11) sont enlevés des tuyaux soudés l'un à l'autre, et
les fils de connexion (13) de l'anneau de soudage sont coupés.

2. Procédé selon la revendication 1, **caractérisé en ce que** l'angle (α) suivant lequel les extrémités du profilé sont coupées est de 135 degrés.

3. Procédé selon la revendication 1, **caractérisé en ce que** l'angle (α) suivant lequel les extrémités du profilé sont coupées est de 150 degrés.

4. Procédé selon la revendication 1, **caractérisé en ce que** la fermeture des orifices des extrémités (3) du profilé est effectuée par soudage d'une plaque en matière plastique (15) sur l'extrémité couépe (3) du profilé.

5. Procédé selon la revendication 4, **caractérisé en ce que** l'angle intérieur concave entre l'extrémité coupée (3) du profilé pourvue de la plaque en matière plastique (15) et la surface d'extrémité du tuyau reçoit une masse en matière thermoplastique extrudée, et l'angle extérieur convexe entre la plaque en matière plastique (15) et la surface d'extrémité du tuyau est un peu arrondi.

6. Procédé selon la revendication 1, **caractérisé en ce que** l'anneau de soudage (5) est flexible et prend la forme de la surface d'extrémité préparée des extrémités des tuyaux lorsque les extrémités des tuyaux sont pressées l'une contre l'autre.

7. Procédé selon la revendication 1, **caractérisé en ce que** l'anneau de soudage (5) est préalablement plié entre deux plaques de pressage (19) à la même forme que les extrémités des tuyaux à raccorder.

8. Procédé selon la revendication 1, **caractérisé en ce que** les tuyaux (1) sont soumis, en plus de la force qui les presse l'un contre l'autre, également à une force de torsion afin d'obtenir une force de compression entre les extrémités coupées (3) du profilé aux extrémités des tuyaux.

9. Procédé selon la revendication 1, **caractérisé en ce que** l'anneau de soudage (5) est fabriqué par extrusion d'une gaine en matière thermoplastique (7) autour d'un fil électriquement résistant peint (6) et par enroulement en spirale du fil électriquement résistant revêtu de matière thermoplastique ainsi obtenu (6) sur une bobine amovible (16) dont le noyau a un diamètre correspondant au diamètre intérieur du tuyau (1) et une longueur correspondant à la largeur de la gaine thermoplastique (7), et dont les joues (17) comportent des fentes radiales (18) à travers lesquelles les spires enroulées en spirale de l'anneau de soudage (5) sont reliées les unes aux autres par des soudures.

10. Procédé selon la revendication 9, **caractérisé en ce que** les fils de connexion (13) de l'anneau de soudage (5) sont tirés vers la périphérie extérieure ou la périphérie intérieure de l'anneau de soudage (5).

11. Procédé selon la revendication 9, **caractérisé en ce que** l'anneau de soudage (5) est fabriqué par enroulement en spirale de deux fils électriquement résistants revêtus de matière thermoplastique (6, 6a) simultanément sur la bobine amovible (16).

12. Procédé selon la revendication 11, **caractérisé en ce que** deux extrémités des dits fils électriquement résistants (6, 6a) sont interconnectées par un moyen de couplage (20) et les deux extrémités opposées sont connectables à une source de courant (12).

13. Procédé selon la revendication 9, **caractérisé en ce que** le fil électriquement résistant revêtu de matière thermoplastique (6) est plié sur lui-même avant l'enroulement sur la bobine amovible (16).

14. Procédé selon la revendication 9, **caractérisé en ce que** l'anneau de soudage (5) est enroulé en une boucle radicalement intérieure et une boucle radialement extérieure (6), dont les fils de connexion sont amenés, respectivement, à la périphérie intérieure et à la périphérie extérieure de l'anneau de soudage (5).
